(19) Europäisches Patentamt
European Patent Office
Office européen des brevets

(11) EP 2 974 812 B1

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **14177072.7**

(22) Anmeldetag: **15.07.2014**

(51) Int Cl.:
*B22F 3/105* (2006.01)          *B22F 3/24* (2006.01)
*C22C 45/00* (2006.01)          *B22F 3/15* (2006.01)
*B22F 3/00* (2006.01)           *C22C 1/04* (2006.01)
*C22C 16/00* (2006.01)          *C22C 45/10* (2006.01)
*B33Y 10/00* (2015.01)          *B33Y 70/00* (2015.01)
*B22F 3/14* (2006.01)

(54) **Verfahren zur Herstellung eines Bauteils aus einer Metalllegierung mit amorpher Phase**

Method for the manufacture of a component from a metal alloy with an amorphous phase

Procédé de fabrication d'un composant en alliage métallique comportant une phase amorphe

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.01.2016 Patentblatt 2016/03**

(73) Patentinhaber: **Heraeus Holding GmbH**
**63450 Hanau (DE)**

(72) Erfinder:
• **Wachter, Hans-Jürgen**
**64846 Gross-Zimmern (DE)**
• **Elsen, Alexander**
**65549 Limburg (DE)**
• **Lukas, Annette**
**63517 Rodenbach (DE)**

(74) Vertreter: **Haggenmüller, Christian et al**
**Maiwald Patentanwalts- und Rechtsanwaltsgesellschaft mbH**
**Elisenhof**
**Elisenstraße 3**
**80335 München (DE)**

(56) Entgegenhaltungen:
**EP-A1- 2 737 964          WO-A1-2014/071135**
**DE-A1-102010 027 802     JP-A- 2009 138 266**
**US-A1- 2013 309 121**

**Beschreibung**

Die Erfindung betrifft ein Verfahren zur Herstellung eines Bauteils aus einer zumindest teilweisen amorphen Metalllegierung.

Amorphe Metalle und deren Legierungen sind seit mehreren Jahrzehnten bekannt. Solche amorphen metallischen Legierungen, die auch als "bulk metallic glasses" - BMG - bezeichnet werden, können durch rasche Erstarrung einer Schmelze aus zwei oder mehr Elementen erzeugt werden. Bei Abkühlraten von bis zu $10^6$ K/s kann sich das Material nicht zu regulären kristallinen Strukturen ordnen; die natürliche Kristallisation wird unterdrückt und der schmelzflüssige Zustand "eingefroren". Aus metallographischer Sicht existiert eine Nahordnung, jedoch keine Fernordnung.

Diese so erzeugten Materialien stellen eine neue Materialklasse mit diversen Vorzügen dar. Neben einer hohen Härte und Festigkeit sind amorphe Metalle besonders korrosionsfest und zeigen vorteilhafte magnetische Eigenschaften im Vergleich zu kristallinen Varianten.

Aufgrund der hohen erforderlichen Abkühlraten setzt die niedrige Wärmeleitfähigkeit der maximal herstellbaren Größe von Halbzeugen aus amorphen Metallen allerdings eine Grenze von einigen Millimetern im Durchmesser. Bei höheren Dicken kann die Wärme nicht schnell genug aus dem Inneren des Materials abgeführt werden und die Kristallisation so nicht unterdrückt werden. Somit limitiert die geringe Halbzeuggröße die spätere Bauteilgröße.

Dünne Bänder und deren Herstellung werden zum Beispiel in der Offenlegung DE 35 24 018 A1 beschrieben, wobei auf einem Träger durch Abschreckkühlung aus der Schmelzphase ein dünnes metallisches Glas erzeugt wird. Auch wird zum Beispiel in der Patentschrift EP 2 430 205 B1 ein Composite aus einer amorphen Legierung beschrieben, das für seine Herstellung eine Abkühlrate von $10^2$ K/s benötigt. Nachteilig ist hieran, dass mit solchen bekannten Methoden nur dünne Schichten oder sehr kompakte Bauteile mit einigen Millimetern Querschnitt aufgebaut werden können.

Ein Problem besteht also darin, große Bauteile in komplexen Formen herzustellen, die eine amorphe Struktur aufweisen. Die notwendigen Abkühlraten sind für komplexe Bauteile und Halbzeuge mit großem Volumen technisch nicht realisierbar. Aus der WO 2008/039134 A1 ist ein Verfahren bekannt, bei dem ein größeres Bauteil aus einem amorphen Metall-Pulver hergestellt wird. Dazu wird das Bauteil nach Art eines 3D-Drucks schichtweise aufgebaut, wobei Teilbereiche der Schichten mit einem Elektronenstrahl aufgeschmolzen werden.

Nachteilig ist hieran, dass das Verfahren nur sehr aufwendig und kostspielig umzusetzen ist. Zudem ist mit einem solchen Verfahren keine ausreichende Homogenität der physikalischen Eigenschaften des erzeugten Bauteils zu erzielen. Um eine stabile Verbindung des amorphen Metallpulvers zu ermöglichen, muss das Pulver mit dem Elektronenstrahl lokal aufgeschmolzen werden. Durch das lokale Aufschmelzen und wieder Abkühlen des Pulvers kann es zu einer punktuellen Überschreitung der Kristallisationstemperatur und einer Kristallisation der Legierung kommen, wenn die Abkühlrate der Schmelze zu gering verläuft. Dadurch entstehen eine unerwünschte Menge und eine ungleichmäßige Verteilung an kristalliner Phase in dem Bauteil. Zudem dauert das Verfahren relativ lang, da sichergestellt werden muss, dass alle mit dem Elektronenstrahl getroffenen Bereiche in ausreichendem Umfang Schmelzen. Die Dauer, mit der der Elektronenstrahl auf einer Stelle des Pulvers verweilt, und dadurch die Temperatur müssen dabei sehr genau eingestellt werden.

US 2013/309121 A1 beschreibt die Herstellung eines metallisches Glases aus amorphen Metallpulvern in einem additiven Fertigungsverfahren.

DE 10 2010 027 802 A1 beschreibt ein Verfahren zur Herstellung eines amorphen oder nanokristallinen metallischen Bauteils durch Laserstrahlschmelzen.

WO 2014/071135 A1 beschreibt ein additives Fertigungsverfahren unter Verwendung einer gepulsten Laserstrahlung.

EP 2 737 964 A1 beschreibt die Herstellung eines Bauteils durch ein additives Fertigungsverfahren, wobei jeweils das Material in benachbarter Position zu dem gerade aufgeschmolzenen Material auf eine Temperatur unterhalb der Schmelztemperatur erwärmt wird, um so thermische Spannungen möglichst gering zu halten.

JP 2009-138266 A beschreibt die Herstellung eines Körpers aus einem amorphen Metallpulver unter spezifischen Temperatur- und Druckbedingungen.

Die Aufgabe der Erfindung besteht also darin, die Nachteile des Stands der Technik zu überwinden. Insbesondere soll ein einfaches und kostengünstig zu realisierendes Verfahren entwickelt werden, mit dem ein Bauteil aus einer Metalllegierung mit amorphem Anteil hergestellt werden kann, das ein Volumen 0,1 cm$^3$ und mehr, bevorzugt 1 cm$^3$ und mehr, aufweisen kann und das in unterschiedlichen auch komplexen Formen erzeugt werden kann. Das erzeugte Bauteil soll auch eine möglichst hohe Homogenität hinsichtlich der physikalischen Eigenschaften und der Verteilung der amorphen Phase aufweisen. Das Verfahren soll variabel sein und gut reproduzierbare Ergebnisse liefern. Das erzeugte Bauteil soll einen möglichst hohen Anteil an amorpher metallischer Phase aufweisen. Auch ist es wünschenswert, wenn das erzeugte Bauteil möglichst kompakt ist und nur wenige Poren aufweist. Eine weitere Aufgabe kann darin gesehen werden, dass das Verfahren mit einer möglichst großen Anzahl unterschiedlicher Legierungen umsetzbar ist, die eine amorphe Phase aufweisen. Ferner ist es vorteilhaft, wenn das Verfahren mit möglichst einfachen und in Labors üblicherweise vorhandenen Apparaturen und Werkzeugen umsetzbar ist.

Die Aufgaben der Erfindung werden gelöst durch ein Verfahren zur Herstellung eines Bauteils aus einer zumindest teilweise amorphen Metalllegierung mit den Schritten:

1) Bereitstellen eines Pulvers aus einer zumindest teilweise amorphen Metalllegierung, wobei das Pulver weniger als 1 Gewichtsprozent an Teilchen mit einem Durchmesser kleiner als 5 $\mu$m aufweist oder das Pulver gesiebt oder durch Windsichten behandelt wird, so dass es weniger als 1 Gewichtsprozent an Teilchen mit einem Durchmesser kleiner als 5 $\mu$m aufweist;

2) Erzeugen eines geformten Halbzeugs aus dem Pulver mit einem 3D-Druckverfahren, indem das Pulver schichtweise aufgetragen wird und die Pulverpartikel der jeweils neu aufgetragenen Schicht an der Oberfläche des zu formenden Halbzeugs durch gezielten lokalen Wärmeeintrag mit einem Elektronenstrahl oder einem Laserstrahl vollständig aufgeschmolzen und beim wieder Abkühlen miteinander verbunden werden unter Bildung einer dichten, porenfreien Struktur, während das Pulver im Volumen des zu formenden Halbzeugs lediglich angesintert wird, um eine Haftung der Pulverpartikel an den nächsten Nachbarn zu erzielen; und

3) Heißpressen des Halbzeugs, wobei das Heißpressen bei einer Temperatur T erfolgt, die zwischen der Transformationstemperatur $T_T$ und der Kristallisationstemperatur $T_K$ der amorphen Phase der Metalllegierung liegt und folgender Bedingung genügt:

$$T_T < T < T_T + (30/100) * (T_K - T_T),$$

wobei während des Heißpressens ein mechanischer Druck auf das Halbzeug ausgeübt wird und das Halbzeug während des Heißpressens verdichtet wird und die Dauer des Heißpressens in einem zeitlichen Bereich von 3 Sekunden pro Millimeter der Dicke oder des größten relevanten Durchmessers des Halbzeugs bis 900 Sekunden pro Millimeter der Dicke oder des größten relevanten Durchmessers des Halbzeugs erfolgt, so dass die Pulverpartikel nach dem Heißpressen verbunden sind und das hergestellte Bauteil einen amorphen Anteil von mindestens 85 Prozent aufweist.

Bevorzugt wird das Halbzeug beim Erzeugen an der gesamten Oberfläche des zu formenden Halbzeugs durch gezielten lokalen Wärmeeintrag aufgeschmolzen. Dies erfolgt bevorzugt, indem die Pulverpartikel jeder neu aufgetragenen Schicht an der Oberfläche des zu formenden Halbzeugs durch gezielten lokalen Wärmeeintrag aufgeschmolzen werden.

Die Dauer des Heißpressens wird derart gewählt, dass die Dauer zumindest so lange ist, dass das Pulver nach dem Heißpressen gesintert ist, und dass die Dauer höchstens so lange ist, dass das Halbzeug nach dem Heißpressen noch einen amorphen Anteil von mindestens 85 Prozent aufweist.

Da die Pulverpartikel nicht alle gleich groß sind und da, selbst wenn die Pulverpartikel alle gleich groß sind, der lokale Wärmeeintrag nicht völlig homogen erfolgt, kann es sein, dass einige Pulverpartikel vollständig aufgeschmolzen sind, einige nur an deren Oberfläche angeschmolzen sind und weitere Pulverpartikel fest bleiben oder bestenfalls weich werden.

Als amorphes Material bezeichnet man in der Physik und der Chemie einen Stoff, bei dem die Atome keine geordneten Strukturen, sondern ein unregelmäßiges Muster bilden und lediglich über Nahordnung, nicht aber Fernordnung verfügen. Im Gegensatz zu amorphen bezeichnet man regelmäßig strukturierte Materialien als kristallin.

Beim Heißpressen werden die Pulverpartikel an der Oberfläche weich und verbinden sich miteinander und bleiben nach dem Abkühlen verbunden. Dadurch wird aus dem Pulver ein zusammenhängender Körper beziehungsweise ein zusammenhängendes Halbzeug. Das Halbzeug weist gemäß einer bevorzugten Ausführung der vorliegenden Erfindung nach dem Heißpressen eine Dichte von mindestens 97% der theoretischen Dichte der vollständig amorphen Metalllegierung auf.

Die Kombination von Druck- und Temperaturbehandlung beim Heißpressen bewirkt ein kompakteres Halbzeug. Zudem wird die Verbindung durch die plastische Verformung der Pulverpartikel untereinander verbessert, so dass eine kürzere Dauer der Temperaturbehandlung gewählt werden kann und der Anteil kristalliner Phase in dem Bauteil reduziert wird.

Die Transformationstemperatur einer amorphen Phase wird häufig auch als Glasübergangstemperatur oder als Transformationspunkt oder Glasübergangspunkt bezeichnet, wobei hiermit klargestellt sein soll, dass dies äquivalente Begriffe für die Transformationstemperatur sind.

Mit der vorliegenden Erfindung wird vorgeschlagen, dass das Heißpressen des Halbzeugs durch ein Heiß-Isostatisches Pressen des Halbzeugs realisiert wird, bevorzugt das Halbzeug durch Heiß-Isostatisches Pressen verdichtet wird.

Das Heiß-Isostatische Pressen (HIP) hat den Vorteil, dass auch komplexe geformte Bauteile mit dem Verfahren herstellbar sind. Dabei findet ein gleichmäßiges beziehungsweise formtreues Schrumpfen des Halbzeugs statt, so dass die relativen Abmessungen zueinander erhalten bleiben.

Das Aufheizen bis zum Erreichen der Transformationstemperatur und das Abkühlen während des Heißpressens sollen erfindungsgemäß so schnell wie möglich erfolgen, da auch bei diesen Temperaturen unterhalb der Transformationstemperatur eine Kristallisation an den zwangsläufig vorhandenen Impfkristallen erfolgt, aber noch keine Erweichung der Pulverpartikel erreicht wird, die zu einem Verbinden und zu einem Verdichten des Pulvers führen könnte. Es soll erfindungsgemäß eine plastische Verformung der Pulverpartikel erreicht werden, die zu einem Kompaktieren des Pulvers und somit zu einem beschleunigten Verbinden des Pulvers führt. Ein Überschwingen der Temperatur über die gewünschte Solltemperatur oder Endtemperatur soll dabei möglichst gering ausfallen.

Mit der Erfindung wird als bevorzugte Ausgestaltung des Verfahrens auch vorgeschlagen, dass das Heißpressen unter Vakuum erfolgt, wobei bevorzugt das Halbzeug durch ein Heißpressen bei einem Vakuum von zumindest $10^{-3}$ mbar verdichtet wird.

Durch die Anwendung eines derartigen Vakuums kann die Bildung von Oxiden oder anderen Reaktionsprodukten mit Luft vermindert werden. Diese Fremdstoffe sind nicht nur selbst störend, sondern fördern zudem die Bildung an unerwünschter kristalliner Phase in dem Halbzeug während des Heißpressens.

Aus dem gleichen Grund kann erfindungsgemäß zusätzlich oder auch alternativ vorgesehen sein, dass das Heißpressen unter einem Schutzgas erfolgt, insbesondere unter einem Edelgas, wie beispielsweise Argon, bevorzugt mit einer Reinheit von wenigstens 99,99% erfolgt, besonders bevorzugt mit einer Reinheit von wenigstens 99,999% erfolgt. Bevorzugt kann bei solchen Ausführungsformen vorgesehen sein, dass die Atmosphäre, in der das Heißpressen erfolgt, durch mehrmaliges Evakuieren und Spülen mit Edelgas, insbesondere mit Argon, weitgehend von Restgasen befreit wird.

Es kann erfindungsgemäß alternativ auch vorgesehen sein, dass das Heißpressen unter einem reduzierenden Gas erfolgt, insbesondere unter einem Formiergas erfolgt, um die Menge an störenden Metall-Oxiden möglichst gering zu halten.

Eine weitere Maßnahme zur Verringerung der Anzahl von Metalloxiden in dem Bauteil beziehungsweise in dem Halbzeug kann durch die Anwendung eines Sauerstoff-Getters beim Heißpressen des Pulvers und/oder bei der Herstellung des Pulvers erreicht werden.

Das Erzeugen des geformten Halbzeugs aus dem Pulver erfolgt mit einem 3D-Druckverfahren.

Hierdurch wird eine hohe Variabilität in der zu erzeugenden Form des Bauteils ermöglicht. Gleichzeitig sind auf diese Weise moderne CAM-Verfahren gut und einfach einsetzbar.

Der gezielte lokale Wärmeeintrag in die Pulverpartikel der jeweils neu aufgetragenen Schicht erfolgt mit einem Elektronenstrahl oder einem Laserstrahl, bevorzugt mit einem gesteuerten Elektronenstrahl oder einem gesteuerten Laserstrahl.

Die Anwendung eines Elektronenstrahls wird gegenüber einem Laserstrahl erfindungsgemäß bevorzugt, da der Elektronenstrahl und damit die Erwärmung der Pulverpartikel beziehungsweise des Pulvers wesentlich genauer und schneller mit dem Elektronenstrahl erreicht werden kann. Ein Laserstrahl muss über kippbare Spiegel ausgerichtet werden, während ein Elektronenstrahl einfach über magnetische Felder beziehungsweise elektrische Felder abgelenkt und damit sehr schnell ausgerichtet werden kann. Dies hat den Vorteil, dass der Wärmeeintrag wesentlich genauer gesteuert werden kann.

Mit einer Weiterbildung des erfindungsgemäßen Verfahrens wird vorgeschlagen, dass die Pulverpartikel des zu erzeugenden Bauteils in der jeweils neu aufgetragenen Schicht in zumindest 90% der Fläche der neu aufgetragenen Schicht durch gezielten lokalen Wärmeeintrag angeschmolzen und/oder aufgeschmolzen werden, bevorzugt in zumindest 95% der Fläche der neu aufgetragenen Schicht, besonders bevorzugt in zumindest 99% der Fläche des zu erzeugenden Bauteils in der neu aufgetragenen Schicht.

Hierdurch wird das Verfahren zwar aufwendiger, das erzeugte Bauteil aber gleichzeitig homogener. Für bestimmte Anwendungen, bei denen es besonders auf eine hohe Homogenität der Bauteile beziehungsweise der physikalischen Eigenschaften der Bauteile ankommt, sind derart erzeugte Bauteile besonders gut geeignet.

Es kann auch vorgesehen sein, dass das Pulver aus sphärischen Pulverpartikeln besteht und die Pulverpartikel einen Durchmesser von weniger als 125 μm aufweisen.

Bevorzugt besteht das Pulver aus Pulverpartikeln von denen 100% weniger als 125 μm Durchmesser haben. Solche Partikelgrößen beziehungsweise Partikelverteilungen werden häufig auch mit $D_{100}$ = 125 μm bezeichnet.

Sphärische Partikel müssen im Sinne der vorliegenden Erfindung keine geometrisch perfekten Kugeln sein, sondern können auch von der Kugelform abweichen. Bevorzugte sphärische Pulverpartikel weisen eine abgerundete zumindest näherungsweise kugelförmige Form auf und haben ein Verhältnis des längsten Querschnitts zum kürzesten Querschnitt von höchstens 2 zu 1. Im Sinne der vorliegenden Erfindung ist mit einer sphärischen Geometrie also keine streng geometrische beziehungsweise mathematische Kugel gemeint. Die Querschnitte beziehen sich dabei auf innerhalb der Pulverpartikel verlaufende extremale Abmessungen. Besonders bevorzugte sphärische Pulverpartikel können ein Verhältnis des längsten Querschnitts zum kürzesten Querschnitt von höchstens 1,5 zu 1 aufweisen oder ganz besonders bevorzugt kugelförmig sein. Als Durchmesser wird dabei erfindungsgemäß der größte Querschnitt der Pulverpartikel angenommen.

Die sphärische Form der Pulverpartikel hat die folgenden Vorteile:
Es kann eine hohe Schüttdichte des Pulvers erreicht werden.
Die Pulverpartikel weisen ähnlich gekrümmte Oberflächen auf, die bei dem Heißpressen bei den gleichen Bedingungen (Temperatur und Zeit beziehungsweise dem gleichen Wärmeenergieeintrag) weich werden - oder zumindest unter in guter Näherung den gleichen Bedingungen weich werden. Dadurch verbinden sich diese beim Heißpressen besonders gut und innerhalb einer kurzen Zeitspanne, beziehungsweise zu einem vorbekannten Zeitpunkt beziehungsweise in einem vorbekannten Zeitintervall, mit benachbarten Pulverpartikeln. Ein weiterer Vorteil einer hohen Schüttdichte ist ein geringer Schrumpf des Halbzeugs beim Heißpressen. Dadurch wird eine endformnahe Fertigung möglich.

Die Pulverpartikelgröße des Pulvers beziehungsweise die Pulverpartikelgrößenverteilung des Pulvers kann durch den Herstellungsprozess und durch ein Sieben eines Ausgangs-Pulvers erreicht werden. Das erfindungsgemäß bereitgestellte Pulver wird also durch Sieben eines Ausgangs-Pulvers hergestellt, bevor es für das erfindungsgemäße Verfahren bereitgestellt beziehungsweise verwendet wird. Zudem kann durch Sieben auch sichergestellt werden, dass die Anzahl der Pulverpartikel mit einer von der sphärischen Form stark abweichenden Form, die durch Ansintern mehrerer Pulverpartikel entstanden sind und die in dem Ausgangs-Pulver enthalten sind, reduziert oder minimiert werden kann.

Die Dauer des Heißpressens wird derart gewählt, dass die Pulverpartikel nach dem Heißpressen miteinander verbunden sind und das hergestellte Bauteil einen amorphen Anteil von mindestens 85 Prozent aufweist, bevorzugt von mehr als 90 Prozent, besonders bevorzugt von mehr als 95 Prozent, ganz besonders bevorzugt von mehr als 98 Prozent.

Je höher der Anteil der amorphen Phase in dem Halbzeug ist, desto mehr nähert man sich den gewünschten physikalischen Eigenschaften eines vollständig aus amorpher Phase bestehenden Halbzeugs.

Bevorzugte Ausgestaltungen der vorliegenden Erfindung können auch vorsehen, dass als Pulver ein Pulver aus einer amorphen Metalllegierung mit mindestens 50 Gewichtsprozenten Zirkonium verwendet wird.

Zirkonium-haltige amorphe Metalllegierungen sind besonders gut zum Umsetzen erfindungsgemäßer Verfahren geeignet, da bei vielen dieser Legierungen eine große Differenz zwischen der Transformationstemperatur und der Kristallisationstemperatur existiert, wodurch das Verfahren leichter umzusetzen ist.

Ganz besonders bevorzugte Ausgestaltungen der vorliegenden Erfindung können vorsehen, dass als Pulver ein Pulver aus einer amorphen Metalllegierung umfassend

a) 58 bis 77 Gewichtsprozenten Zirkonium,
b) 0 bis 3 Gewichtsprozenten Hafnium,
c) 20 bis 30 Gewichtsprozenten Kupfer,
d) 2 bis 6 Gewichtsprozenten Aluminium, und
e) 1 bis 3 Gewichtsprozenten Niob

bereitgestellt wird.

Bevorzugt kann dabei wieder vorgesehen sein, dass als Pulver ein Pulver aus einer amorphen Metalllegierung bestehend aus

a) 58 bis 77 Gewichtsprozenten Zirkonium,
b) 0 bis 3 Gewichtsprozenten Hafnium,
c) 20 bis 30 Gewichtsprozenten Kupfer,
d) 2 bis 6 Gewichtsprozenten Aluminium, und
e) 1 bis 3 Gewichtsprozenten Niob

bereitgestellt wird.

Dabei ergibt die Summe der chemischen Elemente 100%. Als Rest ist Zirkonium enthalten.

Der Restanteil bis auf 100 Gewichtsprozente ist dabei Zirkonium. Übliche Verunreinigungen können in der Legierung enthalten sein. Diese Zirkonium-haltigen amorphen Metalllegierungen sind ganz besonders gut zum Umsetzen erfindungsgemäßer Verfahren geeignet.

Des Weiteren kann vorgesehen sein, dass das Pulver durch Schmelzverdüsung hergestellt wird, bevorzugt durch Schmelzverdüsung in einem Edelgas, insbesondere in Argon, besonders bevorzugt durch Schmelzverdüsung in einem Edelgas der Reinheit 99,99%, 99,999% oder einer höheren Reinheit. Im Rahmen der vorliegenden Erfindung wird auch dann von einer amorphen Metalllegierung gesprochen, wenn die Metalllegierung einen Anteil an amorpher Phase von wenigstens 85 Volumenprozent aufweist.

Die Herstellung des Pulvers erfolgt selbstverständlich vor dem Bereitstellen des Pulvers. Durch die Schmelzverdüsung lassen sich Pulverpartikel mit sphärischer Form auf einfache und kostengünstige Art herstellen. Die Verwendung von Edelgas, insbesondere von Argon oder hochreinem Argon bei der Schmelzverdüsung bewirkt, dass in dem Pulver möglichst wenige störende Verunreinigungen wie Metalloxide enthalten sind.

Das Pulver weist weniger als 1 Gewichtsprozent an Teilchen mit einem Durchmesser kleiner als 5 $\mu$m auf oder das Pulver wird gesiebt oder durch Windsichten behandelt, so dass es weniger als 1 Gewichtsprozent an Teilchen mit einem Durchmesser kleiner als 5 $\mu$m aufweist.

Erfindungsgemäß bevorzugt werden Pulverpartikel mit einem Durchmesser von weniger als 5 $\mu$m durch Windsichten entfernt, beziehungsweise genauer der Anteil von Pulverpartikeln mit einem Durchmesser von weniger als 5 $\mu$m durch Windsichten reduziert.

Durch den geringen Anteil von Pulverpartikeln mit einem Durchmesser kleiner als 5 $\mu$m wird die für eine Oxidation oder für eine andere störende chemische Reaktion der Pulverpartikel mit umgebendem Gas empfindliche Oberfläche des Pulvers (Summe der Oberflächen aller Pulverpartikel) begrenzt. Des Weiteren wird durch die Begrenzung der Korngröße des Pulvers sichergestellt, dass die Erweichung der Pulverpartikel zu ähnlichen Bedingungen (hinsichtlich der Temperatur und der Zeit beziehungsweise des erfolgten Energieeintrags) stattfinden wird, da die Krümmungen der Oberflächen der Pulverpartikel dann ähnlich sind und sich hierdurch eine kompakte Füllung des Pulvers durch Pressen erreichen lässt. Ein geringer Anteil von feinen Pulverpartikeln (kleiner als 5 $\mu$m) wirkt sich nicht nachteilig aus, da solche Pulverpartikel sich in den Zwischenräumen zwischen größeren Partikeln einlagern können und somit die Dichte des ungesinterten Pulvers erhöhen.

Das Heißpressen des Pulvers erfolgt bei einer Temperatur (T) zwischen der Transformationstemperatur ($T_T$) und einer Maximal-Temperatur, wobei die Maximal-Temperatur um 30% von der Temperaturdifferenz zwischen der Transformationstemperatur ($T_T$) und der Kristallisationstemperatur ($T_K$) der amorphen Phase der metallischen Legierung oberhalb der Transformationstemperatur ($T_T$) liegt, wobei bevorzugt die Maximal-Temperatur um 20% oder 10% von der Temperaturdifferenz zwischen der Transformationstemperatur ($T_T$) und der Kristallisationstemperatur ($T_K$) der amorphen Phase der metallischen Legierung oberhalb der Transformationstemperatur ($T_T$) liegt.

Wenn das Heißpressen dicht bei oder oberhalb der Transformationstemperatur ($T_T$) erfolgt, wird das Entstehen und das Wachsen kristalliner Phase relativ gering ausfallen und damit die Reinheit der amorphen Phase in dem Bauteil hoch sein. Als Formel ausgedrückt erfüllt die Temperatur T, bei der das Heißpressen des Pulvers erfolgt, bezogen auf die Transformationstemperatur $T_T$ und die Kristallisationstemperatur $T_K$ der amorphen Phase der metallischen Legierung die folgende Bedingung:

$$T_T < T < T_T + (30/100) * (T_K - T_T)$$

Bevorzugt gilt folgende Bedingung: $T_T < T < T_T + (20/100) * (T_K - T_T)$

Besonders bevorzugt gilt folgende Bedingung: $T_T < T < T_T + (10/100) * (T_K - T_T)$

Mit den in den vorangegangenen mathematischen Formeln angegebenen Temperaturbereichen, in denen das Heißpressen stattfinden soll, wird eine Verbindung der Pulverpartikel und eine Verdichtung des Halbzeugs bei geringer Ausbildung kristalliner Phasen in dem Halbzeug beziehungsweise dem hergestellten Bauteil erreicht.

Eine besonders vorteilhafte Ausgestaltung erfindungsgemäßer Verfahren ergibt sich wenn vorgesehen ist, dass die Dauer des Heißpressens in Abhängigkeit von der geometrischen Form, insbesondere von der Dicke, des Halbzeugs gewählt wird, bevorzugt in Abhängigkeit von dem größten relevanten Durchmesser des Halbzeugs gewählt wird.

Die geometrische Form, beziehungsweise die Dicke, des Halbzeugs wird dahingehend berücksichtigt, dass die Wärmeleitung in dem geformten Pulver beziehungsweise in dem geformten Halbzeug ausreichen soll, um auch das Pulver im Inneren des Halbzeugs beziehungsweise das Halbzeug im Inneren bis zur Transformationstemperatur oder bis oberhalb der Transformationstemperatur zu erhitzen, so dass auch im Inneren des Halbzeugs eine Erweichung und Verdichtung des Pulvers erfolgt.

Der größte relevante Durchmesser des Halbzeugs kann geometrisch durch die größte Kugel bestimmt werden, die geometrisch innerhalb des geformten Halbzeugs untergebracht werden kann. Bei der Bestimmung des größten relevanten Durchmessers können Kanäle oder Spalten in dem Körper unberücksichtigt bleiben, die zum Wärmeeintrag über ein umgebendes Gas und/oder eine andere Wärmequelle nicht oder nur wenig (beispielsweise in der Summe weniger als 5%) beitragen.

Die Dauer des Heißpressens erfolgt in einem zeitlichen Bereich von 3 Sekunden pro Millimeter der Dicke oder des größten relevanten Durchmessers des Halbzeugs bis 900 Sekunden pro Millimeter der Dicke oder des größten relevanten Durchmessers des Halbzeugs, wobei bevorzugt die Dauer des Heißpressens in einem zeitlichen Bereich von 5 Sekunden pro Millimeter der Dicke oder des größten relevanten Durchmessers des Halbzeugs bis 600 Sekunden pro Millimeter der Dicke oder des größten relevanten Durchmessers des Halbzeugs erfolgt.

Durch die Berücksichtigung der Form, der Dicke, beziehungsweise der Wandstärke des Halbzeugs, und/oder des größten relevanten Durchmessers des Halbzeugs wird die Dauer des Heißpressens so gewählt, dass eine ausreichende Verdichtung des Pulvers und Verbindung der Pulverpartikel erfolgt, gleichzeitig aber die Bildung kristalliner Phase in dem Halbzeug möglichst gering gehalten wird oder idealerweise minimal ist. Für bestimmte Bauteile und für einige Anwendungen kann es bereits ausreichend sein, wenn nur die Randbereiche des Bauteils vollständig verdichtet sind und im Inneren des Bauteils noch nicht verbundenes oder verdichtetes Pulver vorhanden ist. Bevorzugt wird das Bauteil aber auch im Inneren verdichtet.

Gemäß einer bevorzugten Ausgestaltung der vorliegenden Erfindung kann vorgesehen sein, dass die Pulverpartikel durch das Heißpressen plastisch verformt werden.

Hierdurch wird eine besonders gute Verdichtung des Pulvers bei gleichzeitig niedriger Erzeugung kristalliner Phase erreicht.

Das mit dem erfindungsgemäßen Verfahren hergestellte Bauteil kann beispielsweise als Zahnrad, Reibrad, verschleißfeste Komponente, Gehäuse, Uhrengehäuse, Teil eines Getriebes oder Halbzeug verwendet werden.

Der Erfindung liegt die überraschende Erkenntnis zugrunde, dass es durch ein Heißpressen des Halbzeugs nach dem schichtweisen Aufbau des Halbzeugs möglich ist, den lokalen Wärmeeintrag beim schichtweisen Aufbau sehr gering zu halten. Es reicht bereits aus, wenn das Pulver im Bereich der Oberfläche der zu erzeugenden Form beziehungsweise des geformten Halbzeugs aufgeschmolzen wird, damit das erzeugte Halbzeug so stabil ist, dass es nicht von alleine zerfällt. Durch den geringen lokalen Wärmeeintrag und die schnelle Abkühlung der erhitzten Bereiche gelingt es, in dem Halbzeug nur eine geringe Menge kristalliner Phase entstehen zu lassen. Die Verdichtung erfolgt nachträglich durch das Heißpressen des Halbzeugs. Bei der Verdichtung beim Heißpressen kann die Temperatur wesentlich genauer eingestellt werden, so dass das Entstehen und Wachsen kristalliner Phase gering gehalten werden kann.

Für die Erfindung wird genutzt, dass die Viskosität amorpher Legierungen bei Überschreiten der Glasübergangstemperatur $T_G$ (gleichbedeutend mit Transformationstemperatur $T_T$) stark abfällt, wodurch sie formbar werden. Mittels thermoplastischer Formgebungsverfahren können amorphe Legierungen unter mechanischem Druck dann in beliebiger Form verdichtet werden.

Es wurde im Rahmen der vorliegenden Erfindung gefunden, dass erfindungsgemäße Verfahren zu besonders guten Resultaten führen, wenn die amorphen metallischen Pulver zur Herstellung des Bauteils über Schmelzverdüsung hergestellt werden und die Pulver röntgenamorph sind, wobei bevorzugt deren Pulverpartikel kleiner als 125 $\mu$m sind. Die feinen Partikel enthalten eine nur sehr geringe Wärmemenge, die abgeführt werden muss, um die Partikel amorph erstarren zu lassen. Bei der Schmelzverdüsung werden die entstehenden schmelzflüssigen Tröpfchen der Legierung sehr schnell durch den Prozessgasstrom (Argon) abgekühlt, wodurch das Vorliegen einer amorphen Pulverfraktion gefördert wird. Mit einer Weiterentwicklung der Erfindung wird vorgeschlagen, dass von diesem Pulver der Feinstaub (Teilchen kleiner 5 $\mu$m) sowie das Grobkorn von größer 125 $\mu$m weitgehend abgetrennt wird, beispielsweise durch Sieben und/oder durch Windsichten des Pulvers entfernt wird. Solche Pulverfraktionen sind dann ein optimales Ausgangsmaterial (das bereitgestellt Pulver), um durch lokales Anschmelzen und/oder Aufschmelzen und anschließendes Heißpressen komplexe amorphe Bauteile herzustellen. Mit derart hergestellten Pulvern erhält man ein Bauteil mit besonders hohem Anteil an amorpher metallischer Phase. Gleichzeitig hat das so erzeugte und aus einem derartigen Pulver hergestellte Bauteil einen hohen Grad an gesinterten Pulverpartikel und eine geringe Porosität, bevorzugt eine Porosität von weniger als 5%.

Diese amorphen Metallpulver werden erfindungsgemäß mittels generativer Verfahren zu beliebigen Halbzeugen für Bauteile verarbeitet. Da immer nur dünne Pulverschichten aufgeschmolzen werden, ist die dabei abzuführende Wärmemenge gering genug, um die einzelnen Schichten - und damit das Halbzeug als Ganzes - amorph aufzubauen.

Ein besonders geeignetes Verfahren stellt das sogenannte (selektive) Elektronenstrahlschmelzen dar: Dabei wird eine dünne Pulverschicht, die mittels eines Rakels auf eine Trägerplatte aufgetragen wird - gezielt durch einen hochenergetischen und präzise steuerbaren Elektronenstrahl aufgeschmolzen. Durch die hohe Energiedichte des Elektronenstrahls im Vergleich zu ähnlich gearteten Verfahren, die beispielsweise Laserstrahlen als Energiequelle nutzen, findet eine lokal sehr begrenzte Aufheizung der obersten Schicht des Pulvers und ein nur sehr geringer Wärmeeintrag in tieferliegende Schichten statt. Dadurch wird ein nachträgliches Kristallisieren bei Überschreiten der Kristallisierungstemperatur des tieferliegenden und bereits amorph erstarrten Materials wirkungsvoll verhindert. Dieser Prozess kann noch abgekürzt werden, indem das Pulver nicht komplett aufgeschmolzen, sondern die Pulverpartikel nur mit den nächstgelegenen Nachbarpartikeln verbunden werden. Anschließend wird das amorphe Halbzeug durch Heißpressen, bevorzugt durch Heiß-Isostatisches Pressen (HIP) zwischen der Glasübergangstemperatur $T_G$ und Kristallisationstemperatur $T_K$ (beziehungsweise zwischen der Transformationstemperatur $T_T$ (= $T_G$) und Kristallisationstemperatur $T_K$) verdichtet.

Wichtig ist dabei, dass bei dem anschließenden Heißpressen das amorphe Pulver nicht bis zur Kristallisationstemperatur oder darüber hinaus erhitzt wird, da sonst Kristallisation eintritt und der amorphe Charakter der Legierung verloren geht. Andererseits ist es notwendig, das Material mindestens auf die Transformationstemperatur, also die Temperatur, bei der die amorphe Phase der Metalllegierung während der Abkühlung aus dem plastischen Bereich in den starren Zustand übergeht, zu erhitzen. In diesem Temperaturbereich können sich die Pulverpartikel verbinden, ohne jedoch zu kristallisieren. Die Transformationstemperatur kann auch als Glasübergangstemperatur bezeichnet werden.

Da es jedoch technisch kaum möglich und wirtschaftlich nicht sinnvoll ist, absolut frei von Verunreinigungen sowie auch frei von insbesondere Sauerstoff zu sein, sind mikrokristalline Einschlüsse nicht zu vermeiden. Geringe, im zweistelligen ppm Bereich liegende Sauerstoffanteile verursachen entsprechende Oxidbildung der sauerstoffaffinen Bestandteile der Legierung. Diese sind dann als kleine Kristallisationskeime vorhanden und können so zu kleinen Oxid-Einschlüssen mit Körnern führen, die im Schliffbild bei 1000-facher Vergrößerung oder bei einer Röntgendiffraktometrie-Untersuchung als Peak erkennbar sind. Ähnliche Effekte können auch durch weitere beziehungsweise andere Verunreinigungen der Ausgangsmaterialien sowie weitere Elemente, wie beispielsweise Stickstoff, entstehen.

Die Dauer des Heißpressens richtet sich hauptsächlich nach dem Bauteilvolumen beziehungsweise dem Halbzeugvolumen und sollte in der Regel nicht zu lange dauern, da jeder noch so kleine Kristallkeim als Impfkristall wirkt und so Kristalle wachsen können, beziehungsweise sich so die unerwünschte kristalline Phase in dem Halbzeug ausbreitet. In Versuchen mit Zirkon-basierten Legierungen konnte aufgezeigt werden, dass eine Temperaturbehandlung beim Heißpressen in dem erfindungsgemäßen Temperaturbereich mit einer Dauer von maximal 400 Sekunden pro 1 mm Halbzeugquerschnitt, besonders gute Ergebnisse liefert. Auch die Aufheizphase sollte so schnell wie möglich erfolgen, da teilweise bereits 50 Kelvin unter der Transformationstemperatur das unerwünschte Kristallwachstum eintritt.

Mit dem erfindungsgemäßen Verfahren können so einerseits fertige amorphe Bauteile produziert werden, andererseits können amorphe Halbzeuge für die Weiterverarbeitung, beispielsweise für eine thermoplastische Formung hergestellt werden, deren Größe nur noch durch den Arbeitsraum der verwendeten Anlagen begrenzt sind.

Im Folgenden werden weitere Ausführungsbeispiele der Erfindung anhand eines schematisch dargestellten Ablaufdiagramms und anhand von 3 Figuren erläutert, ohne jedoch dabei die Erfindung zu beschränken. Dabei zeigt:

Figur 1: eine vergrößerte Aufnahme eines mit einem Elektronenstrahl aufgeschmolzenen und gesinterten Pulvers aus einer amorphen Metalllegierung bei einer 50-fachen Vergrößerung;

Figur 2: eine vergrößerte Aufnahme eines mit einem Elektronenstrahl aufgeschmolzenen und gesinterten Pulvers aus einer amorphen Metalllegierung bei einer 200-fachen Vergrößerung; und

Figur 3: eine Schar Röntgen-Pulver-Diffraktogramme eines amorphen Zr-Al-Cu-Nb-Pulvers (untere Kurve) und amorpher Zr-Al-Cu-Nb-Pulver, die bei unterschiedlichen Temperaturen gesintert wurden.

**Ablaufdiagramm** :

| Legierung |
|:---:|
| ↓ |
| Pulverherstellung |
| ↓ |
| Pulverfraktionierung |
| ↓ |
| Additive Fertigung |
| ↓ |
| Pressen bei $T_T < T < T_K$ |

In dem Ablaufdiagramm wird mit T die Arbeitstemperatur, mit $T_T$ die Transformationstemperatur der amorphen Metalllegierung und mit $T_K$ die Kristallisationstemperatur der amorphen Phase der Metalllegierung bezeichnet.

Aus einer metallischen Legierung, deren Zusammensetzung zur Bildung einer amorphen Phase geeignet ist oder die bereits aus der amorphen Phase besteht, wird ein amorphes metallisches Pulver erzeugt. Anschließend erfolgt eine Pulverfraktionierung, bei der zu kleine und zu große Pulver-Teilchen beziehungsweise Pulverpartikel, insbesondere durch Sieben, entfernt werden. Das Pulver wird anschließend durch ein additives Fertigungsverfahren zu einem Bauteil der gewünschten Geometrie verarbeitet. Das Pulver, das die Außenkontur des Bauteils bildet, wird vollständig aufgeschmolzen und bildet eine dichte, porenfreie Struktur, wohingegen das Pulver im Volumen das Bauteils lediglich angesintert wird, um eine Haftung der Pulverpartikel an den nächsten Nachbarn zu erzielen.

Die Temperaturbehandlung während des Pressens oder nach dem Pressen erfolgt für einen Zeitraum von maximal 10 min bei einer Temperatur oberhalb der Transformationstemperatur $T_T$ und unterhalb der Kristallisationstemperatur $T_K$ der amorphen Phase der verwendeten metallischen Legierung.

Es folgen konkrete Ausführungsbeispiele, in denen erfindungsgemäße Verfahren beschrieben werden und bei denen eine Auswertung der so erhaltenen Ergebnisse erfolgt.

Beispiel 1:

Eine Legierung aus 70,6 Gewichtsprozent Zirkonium (Haines&Maassen Metallhandelsgesellschaft mbH Bonn, Zr-201-Zirkon Crystalbar), 23,9 Gewichtsprozent Kupfer (Alpha Aesar GmbH & Co KG Karlsruhe, Copper plate, Oxygen free, High Conductivity (OFCH) Artikelnummer 45210), 3,7 Gewichtsprozent Aluminium (Alpha Aesar GmbH & Co KG Karlsruhe, Aluminium Ingot 99,999% Artikelnummer 10571) und 1,8 Gewichtsprozent Niob (Alpha Aesar GmbH & Co KG Karlsruhe, Niob Folie 99,97% Artikelnummer 00238) wurde in einer Induktionsschmelzanlage (VSG, induktiv beheizte Vakuum-, Schmelz- und Gießanlage, Nürmont, Freiberg) unter 800 mbar Argon (Argon 6.0, Linde AG, Pullach) erschmolzen und in eine wassergekühlte Kupferkokille abgegossen. Aus der so erzeugten Legierung wurde mit einem Verfahren, wie es beispielsweise aus der WO 99/30858 A1 bekannt ist, in einer Nanoval Schmelzverdüsungs-Apparatur (Nanoval GmbH & Co. KG, Berlin) durch Zerstäubung der Schmelze mit Argon ein feines Pulver erzeugt.

Durch Abtrennung mittels Windsichten mit einem Condux-Feinstsichter CFS (Netsch-Feinmahltechnik GmbH Selb Deutschland) wird das Feinkorn abgetrennt, so dass weniger als 0,1 % der Teilchen kleiner als 5 $\mu$m groß sind, das heißt zumindest 99,9% der Teilchen einen Querschnitt oder eine Abmessungen von 5 $\mu$m oder mehr aufweisen, und mittels Siebung durch ein Analysensieb mit 125 $\mu$m Maschenweite (Retsch GmbH, Haan- Deutschland, Artikelnummer 60.131.000125) werden alle Pulverpartikel entfernt, die größer als 125 $\mu$m sind. Das derart erzeugte Pulver wird mittels Röntgendiffraktometrie untersucht und weist einen amorphen Anteil größer 95% auf.

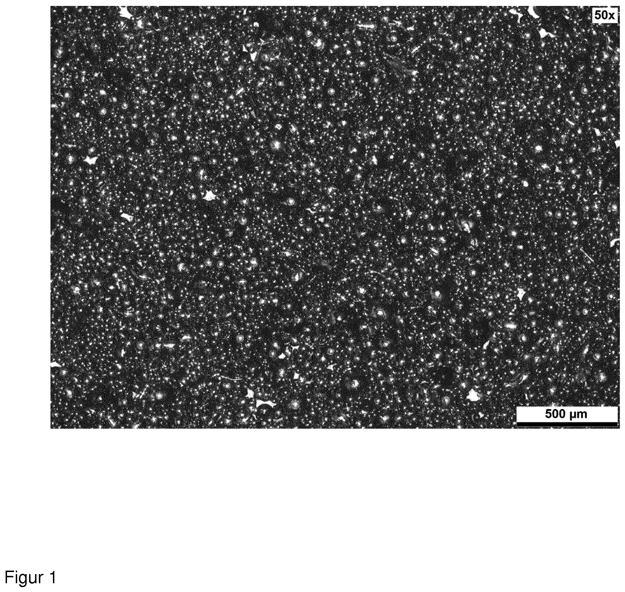

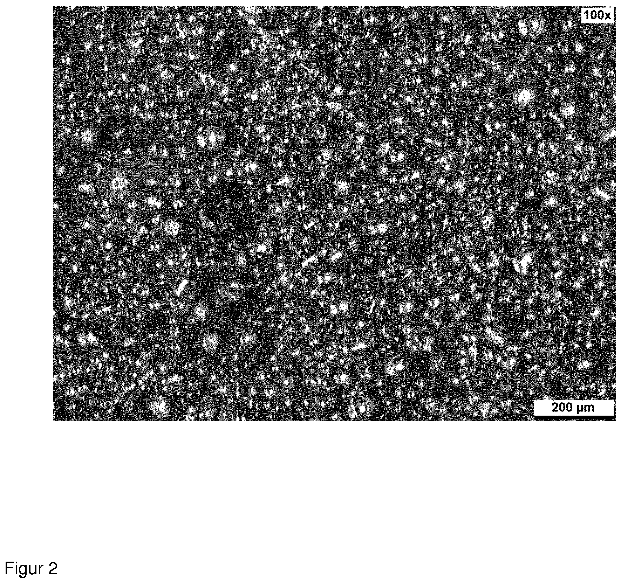

Das so erzeugte Pulver wird in einer EBM-(Electron Beam Melting, Deutsch Elektronen-Strahl-Schmelzen)-Fertigungsanlage (Arcam AB A1, Möndal, Schweden) ohne Vorheizung des Pulvers schichtweise aufgetragen, wobei ein Elektronenstrahl mit einer Leistung von 150 W bis 210 W die Kontur des Bauteils abrastert und die Pulverpartikel aufschmilzt. Die einzelnen Schichten erstarren dabei so schnell, dass eine Kristallisation unterdrückt wird und die Legierung amorph erstarrt. Für die Versinterung des Pulvers im Volumen des Bauteils wird der Elektronenstrahl auf 50 Strahlen aufgefächert und flächig über das Pulverbett gelenkt. Damit ist die Energie niedrig genug, dass die einzelnen Pulverpartikel nicht aufschmelzen, sondern nur an ihren nächsten Nachbarn anhaften. Aufnahmen des derart gesinterten Pulvers mit einem Mikroskop sind in den Figuren 1 und 2 gezeigt.

Während des ganzen Prozesses muss die Temperatur des Pulverbetts unterhalb der Kristallisationstemperatur $T_k$ der Legierung gehalten werden.

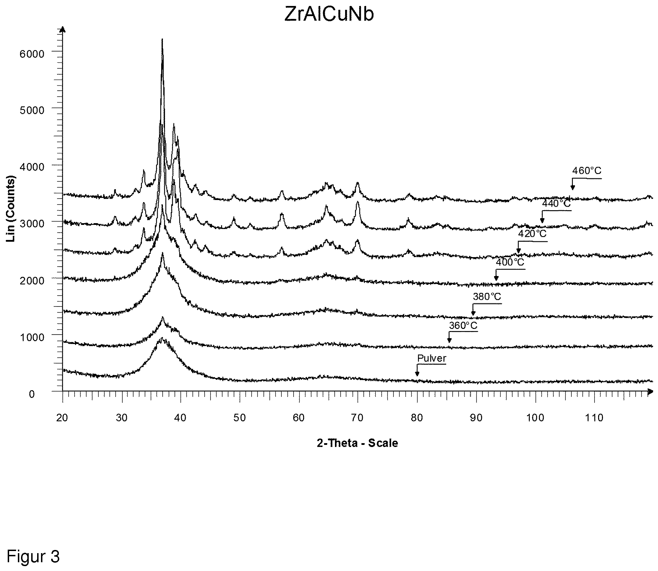

In Figur 3 sind Röntgen-Pulver-Diffraktogramme des Ausgangspulvers und von Pulvern abgebildet, die bei unterschiedlichen Temperaturen gesintert wurden.

Das Ausgangspulver (untere Kurve) zeigt keine Reflexe kristalliner Phasen, liegt also vollständig amorph vor.

Bei Temperaturen von 360 °C, 380 °C und 400 °C finden sich nur wenige Anzeichen von Kristalliten, die für die Verarbeitbarkeit im Rahmen der vorliegenden Erfindung jedoch noch tolerierbar sind. Ab einer Sintertemperatur von 420 °C sind deutliche Reflexe sichtbar, die auf eine kristalline Phase hinweisen. Die Kristallisationstemperatur $T_K$ war in diesem Fall überschritten, die Probe ist auskristallisiert beziehungsweise zu stark kristallisiert.

Die wie beschrieben hergestellten Bauteile werden anschließend durch heißisostatisches Pressen unter einem Druck von 200 Megapascal (200 MPa) unter hochreinem Argon (Argon 6.0, Linde AG, Pullach) bei einer Temperatur von 400°C für 300 Sekunden verdichtet. Damit wird auch das Pulver im Volumen des Bauteils vollständig verdichtet und bildet einen kompakten, porenfreien Körper.

Fünfzehn derart hergestellte Bauteile werden mittels metallographischer Schliffbilder auf den amorphen Flächenanteil im Gefüge untersucht. Hierbei zeigt sich, dass im Durchschnitt 92 % der Flächen amorph sind.

Beispiel 2:

Eine Legierung aus 70,6 Gewichtsprozent Zirkonium (Haines&Maassen Metallhandelsgesellschaft mbH Bonn, Zr-201-Zirkon Crystalbar), 23,9 Gewichtsprozent Kupfer (Alpha Aesar GmbH & Co KG Karlsruhe, Copper plate, Oxygen free, High Conductivity (OFCH) Artikelnummer 45210), 3,7 Gewichtsprozent Aluminium (Alpha Aesar GmbH & Co KG Karlsruhe, Aluminium Ingot 99,999% Artikelnummer 10571) und 1,8 Gewichtsprozent Niob (Alpha Aesar GmbH & Co KG Karlsruhe, Niob Folie 99,97% Artikelnummer 00238) wurde in einer Induktionsschmelzanlage (VSG, induktiv beheizte Vakuum-, Schmelz- und Gießanlage, Nürmont, Freiberg) unter 800 mbar Argon (Argon 6.0, Linde AG, Pullach) erschmolzen und in eine wassergekühlte Kupferkokille abgegossen. Aus der so erzeugten Legierung wurde mit einem Verfahren, wie es beispielsweise aus der WO 99/30858 A1 bekannt ist, in einer Nanoval Schmelzverdüsungs-Apparatur (Nanoval GmbH & Co. KG, Berlin) durch Zerstäubung der Schmelze mit Argon ein feines Pulver erzeugt.

Durch Abtrennung mittels Windsichten mit einem Condux-Feinstsichter CFS (Netsch-Feinmahltechnik GmbH Selb Deutschland) wird das Feinkorn abgetrennt, so dass weniger als 0,1 % der Teilchen kleiner als 5 $\mu$m groß sind,

das heißt zumindest 99,9% der Teilchen einen Querschnitt oder eine Abmessungen von 5 μm oder mehr aufweisen, und mittels Siebung durch ein Analysensieb mit 125 μm Maschenweite (Retsch GmbH, Haan- Deutschland, Artikelnummer 60.131.000125) werden alle Pulverpartikel entfernt, die größer als 125 μm sind. Das derart erzeugte Pulver wird mittels Röntgendiffraktometrie untersucht und weist einen amorphen Anteil größer 95% auf.

Das so erzeugte Pulver wird in einer EBM-(Electron Beam Melting)-Fertigungsanlage (Arcam AB A1, Möndal, Schweden) ohne Vorheizung des Pulvers schichtweise aufgetragen, wobei ein Elektronenstrahl mit einer Leistung von 150 W bis 210 W die Kontur des Bauteils abrastert und die Pulverpartikel aufschmilzt. Die einzelnen Schichten erstarren dabei so schnell, dass eine Kristallisation unterdrückt wird und die Legierung amorph erstarrt. Für die Versinterung des Pulvers im Volumen des Bauteils wird der Elektronenstrahl auf 50 Strahlen aufgefächert und flächig über das Pulverbett gelenkt. Damit ist die Energie niedrig genug, dass die einzelnen Pulverpartikel nicht aufschmelzen, sondern nur an ihren nächsten Nachbarn anhaften. Während des ganzen Prozesses muss die Temperatur des Pulverbettes unterhalb der Kristallisationstemperatur $T_K$ der Legierung gehalten werden.

Die wie beschrieben hergestellten Bauteile werden anschließend durch Pressen unter einem Druck von 200 Megapascal (200 MPa) bei einer Temperatur von 400°C für 180 Sekunden verdichtet. Damit wird auch das Pulver im Volumen des Bauteils vollständig verdichtet und bildet einen kompakten, porenfreien Körper.

Zehn derart hergestellte Bauteile werden mittels metallographischer Schliffbilder auf den amorphen Flächenanteil im Gefüge untersucht. Hierbei zeigt sich, dass im Durchschnitt 87 % der Flächen amorph sind.

Test-und Prüfmethoden:

1) Methode zur Bestimmung der Partikelgröße von Metalllegierungs-Pulvern:

Die Partikelgröße von anorganischen Pulvern wurde durch Laserlichtstreuung mit einem Mastersizer 2000 (Malvern Instruments Ltd., Großbritannien) bestimmt.

2) Prüfmethode für die Bestimmung der Dichte:

Für die Bestimmung der Dichte kann ein geometrisch exakter Quader durch Schleifen der Oberflächen erzeugt werden, so dass dieser mit einer Digitalen Bügelmessschraube (PR1367, Mitutoyo Messgeräte Leonberg GmbH, Leonberg) exakt vermessen werden kann. Mathematisch wird nun das Volumen bestimmt und anschließend wird auf einer Analysenwaage (XPE-Analysenwaagen von Mettler-Toledo GmbH) das genaue Gewicht bestimmt. Durch Bildung des Verhältnisses aus gewogenem Gewicht und berechnetem Volumen ergibt sich die Dichte.

Die theoretische Dichte einer amorphen Legierung entspricht der Dichte beim Schmelzpunkt.

3) Prüfmethode für die Bestimmung des amorphen Flächenanteils im Bauteil:

Hierzu werden jeweils fünfzehn metallographische Schliffe in Anlehnung an die DIN EN ISO 1463 angefertigt, wobei mit einer SiC-Folie 1200 (Struers GmbH, Willich) sowie anschließend folgenden Polierschritten mit Diamantpoliermittel mit 6 μm, 3 μm und 1 μm (Struers GmbH, Willich) und abschließend mit den chemo-mechanischen Oxidpoliersuspensionen OP-S (Struers GmbH, Willich) poliert wird. Die so erzeugten Schliffoberflächen werden unter einem Lichtmikroskop (Leica DM 4000 M, Leica DM 6000 M) mit einer Vergrößerung von 1000 auf kristalline Flächenanteile im Schliffbild untersucht. Hierbei erfolgt eine Auswertung nach Flächenprozent kristalliner-Anteil zu Gesamtfläche des Schliffs.

Die in der voranstehenden Beschreibung, den Figuren sowie den Ansprüchen, dem Ablaufdiagramm und den Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

WO 99/30858 A1 bekannt ist, in einer Nanoval Schmelzverdüsungs-Apparatur (Nanoval GmbH & Co. KG, Berlin) durch Zerstäubung der Schmelze mit Argon ein feines Pulver erzeugt.

Durch Abtrennung mittels Windsichten mit einem Condux-Feinstsichter CFS (Netsch-Feinmahltechnik GmbH Selb Deutschland) wird das Feinkorn abgetrennt, so dass weniger als 0,1 % der Teilchen kleiner als 5 μm groß sind, das heißt zumindest 99,9% der Teilchen einen Querschnitt oder eine Abmessungen von 5 μm oder mehr aufweisen, und mittels Siebung durch ein Analysensieb mit 125 μm Maschenweite (Retsch GmbH, Haan- Deutschland, Artikelnummer 60.131.000125) werden alle Pulverpartikel entfernt, die größer als 125 μm sind. Das derart erzeugte Pulver wird mittels Röntgendiffraktometrie untersucht und weist einen amorphen Anteil größer 95% auf.

Das so erzeugte Pulver wird in einer EBM-(Electron Beam Melting, Deutsch Elektronen-Strahl-Schmelzen)-Fertigungsanlage (Arcam AB A1, Möndal, Schweden) ohne Vorheizung des Pulvers schichtweise aufgetragen, wobei ein Elektronenstrahl mit einer Leistung von 150 W bis 210 W die Kontur des Bauteils abrastert und die Pulverpartikel aufschmilzt. Die einzelnen Schichten erstarren dabei so schnell, dass eine Kristallisation unterdrückt wird und die Legierung amorph erstarrt. Für die Versinterung des Pulvers im Volumen des Bauteils wird der Elektronenstrahl auf 50 Strahlen aufgefächert und flächig über das Pulverbett gelenkt. Damit ist die Energie niedrig genug, dass die einzelnen Pulverpartikel nicht aufschmelzen, sondern nur an ihren nächsten Nachbarn anhaften. Aufnahmen des derart gesinterten Pulvers mit einem Mikroskop sind in den Figuren 1 und 2 gezeigt.

Während des ganzen Prozesses muss die Temperatur des Pulverbetts unterhalb der Kristallisationstemperatur $T_K$ der Legierung gehalten werden.

In Figur 3 sind Röntgen-Pulver-Diffraktogramme des Ausgangspulvers und von Pulvern abgebildet, die bei unterschiedlichen Temperaturen gesintert wurden.

Das Ausgangspulver (untere Kurve) zeigt keine Reflexe kristalliner Phasen, liegt also vollständig amorph vor.

Bei Temperaturen von 360 °C, 380 °C und 400 °C fineln sich nur wenige Anzeichen von Kristalliten, die für die Verarbeitbarkeit im Rahmen der vorliegenden Erfindung jedoch noch tolerierbar sind. Ab einer Sintertemperatur von 420 °C sind deutliche Reflexe sichtbar, die auf eine kristalline Phase hinweisen. Die Kristallisationstemperatur $T_K$ war in diesem Fall überschritten, die Probe ist auskristallisiert beziehungsweise zu stark kristallisiert.

Die wie beschrieben hergestellten Bauteile werden anschließend durch heißisostatisches Pressen unter einem Druck von 200 Megapascal (200 MPa) unter hochreinem Argon (Argon 6.0, Linde AG, Pullach) bei einer Temperatur von 400°C für 300 Sekunden verdichtet. Damit wird auch das Pulver im Volumen des Bauteils vollständig verdichtet und bildet einen kompakten, porenfreien Körper.

Fünfzehn derart hergestellte Bauteile werden mittels metallographischer Schliffbilder auf den amorphen Flächenanteil im Gefüge untersucht. Hierbei zeigt sich, dass im Durchschnitt 92 % der Flächen amorph sind.

Beispiel 2:

Eine Legierung aus 70,6 Gewichtsprozent Zirkonium (Haines&Maassen Metallhandelsgesellschaft mbH Bonn, Zr-201-Zirkon Crystalbar), 23,9 Gewichtsprozent Kupfer (Alpha Aesar GmbH & Co KG Karlsruhe, Copper plate, Oxygen free, High Conductivity (OFCH) Artikelnummer 45210), 3,7 Gewichtsprozent Aluminium (Alpha Aesar GmbH & Co KG Karlsruhe, Aluminium Ingot 99,999% Artikelnummer 10571) und 1,8 Gewichtsprozent Niob (Alpha Aesar GmbH & Co KG Karlsruhe, Niob Folie 99,97% Artikelnummer 00238) wurde in einer Induktionsschmelzanlage (VSG, induktiv beheizte Vakuum-, Schmelz- und Gießanlage, Nürmont, Freiberg) unter 800 mbar Argon (Argon 6.0, Linde AG, Pullach) erschmolzen und in eine wassergekühlte Kupferkokille abgegossen. Aus der so erzeugten Legierung wurde mit einem Verfahren, wie es beispielsweise aus der WO 99/30858 A1 bekannt ist, in einer Nanoval Schmelzverdüsungs-Apparatur (Nanoval GmbH & Co. KG, Berlin) durch Zerstäubung der Schmelze mit Argon ein feines Pulver erzeugt.

Durch Abtrennung mittels Windsichten mit einem Condux-Feinstsichter CFS (Netsch-Feinmahltechnik GmbH Selb Deutschland) wird das Feinkorn abgetrennt, so dass weniger als 0,1 % der Teilchen kleiner als 5 $\mu$m groß sind, das heißt zumindest 99,9% der Teilchen einen Querschnitt oder eine Abmessungen von 5 $\mu$m oder mehr aufweisen, und mittels Siebung durch ein Analysensieb mit 125 $\mu$m Maschenweite (Retsch GmbH, Haan- Deutschland, Artikelnummer 60.131.000125) werden alle Pulverpartikel entfernt, die größer als 125 $\mu$m sind. Das derart erzeugte Pulver wird mittels Röntgendiffraktometrie untersucht und weist einen amorphen Anteil größer 95% auf.

Das so erzeugte Pulver wird in einer EBM-(Electron Beam Melting)-Fertigungsanlage (Arcam AB A1, Möndal, Schweden) ohne Vorheizung des Pulvers schichtweise aufgetragen, wobei ein Elektronenstrahl mit einer Leistung von 150 W bis 210 W die Kontur des Bauteils abrastert und die Pulverpartikel aufschmilzt. Die einzelnen Schichten erstarren dabei so schnell, dass eine Kristallisation unterdrückt wird und die Legierung amorph erstarrt. Für die Versinterung des Pulvers im Volumen des Bauteils wird der Elektronenstrahl auf 50 Strahlen aufgefächert und flächig über das Pulverbett gelenkt. Damit ist die Energie niedrig genug, dass die einzelnen Pulverpartikel nicht aufschmelzen, sondern nur an ihren nächsten Nachbarn anhaften. Während des ganzen Prozesses muss die Temperatur des Pulverbettes unterhalb der Kristallisationstemperatur $T_K$ der Legierung gehalten werden.

Die wie beschrieben hergestellten Bauteile werden anschließend durch Pressen unter einem Druck von 200 Megapascal (200 MPa) bei einer Temperatur von 400°C für 180 Sekunden verdichtet. Damit wird auch das Pulver im Volumen des Bauteils vollständig verdichtet und bildet einen kompakten, porenfreien Körper.

Zehn derart hergestellte Bauteile werden mittels metallographischer Schliffbilder auf den amorphen Flächenanteil im Gefüge untersucht. Hierbei zeigt sich, dass im Durchschnitt 87 % der Flächen amorph sind.

Test-und Prüfmethoden:

1) Methode zur Bestimmung der Partikelgröße von Metalllegierungs-Pulvern:

Die Partikelgröße von anorganischen Pulvern wurde durch Laserlichtstreuung mit einem Mastersizer 2000 (Malvern Instruments Ltd., Großbritannien) bestimmt.

2) Prüfmethode für die Bestimmung der Dichte:

Für die Bestimmung der Dichte kann ein geometrisch exakter Quader durch Schleifen der Oberflächen erzeugt werden, so dass dieser mit einer Digitalen Bügelmessschraube (PR1367, Mitutoyo Messgeräte Leonberg GmbH, Leonberg) exakt vermessen werden kann. Mathematisch wird nun das Volumen bestimmt und anschließend wird auf einer Analysenwaage (XPE-Analysenwaagen von Mettler-Toledo GmbH) das genaue Gewicht bestimmt. Durch Bildung des Verhältnisses aus gewogenem Gewicht und berechnetem Volumen ergibt sich die Dichte.
Die theoretische Dichte einer amorphen Legierung entspricht der Dichte beim Schmelzpunkt.

3) Prüfmethode für die Bestimmung des amorphen Flächenanteils im Bauteil:

Hierzu werden jeweils fünfzehn metallographische Schliffe in Anlehnung an die DIN EN ISO 1463 angefertigt, wobei mit einer SiC-Folie 1200 (Struers GmbH, Willich) sowie anschließend folgenden Polierschritten mit Diamantpoliermittel mit 6 $\mu$m, 3 $\mu$m und 1 $\mu$m (Struers GmbH, Willich) und abschließend mit den chemo-mechanischen Oxidpoliersuspensionen OP-S (Struers GmbH, Willich) poliert wird. Die so erzeugten Schliffoberflächen werden unter einem Lichtmikroskop (Leica DM 4000 M, Leica DM 6000 M) mit einer Vergrößerung von 1000 auf kristalline Flächenanteile im Schliffbild untersucht. Hierbei erfolgt eine Auswertung nach Flächenprozent kristalliner-Anteil zu Gesamtfläche des Schliffs.
Die in der voranstehenden Beschreibung, den Figuren sowie den Ansprüchen, dem Ablaufdiagramm und den Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

**Patentansprüche**

1. Verfahren zur Herstellung eines Bauteils aus einer zumindest teilweise amorphen Metalllegierung mit den Schritten:

   Bereitstellen eines Pulvers aus einer zumindest teilweise amorphen Metalllegierung, wobei das Pulver weniger als 1 Gewichtsprozent an Teilchen mit einem Durchmesser kleiner als 5 $\mu$m aufweist oder das Pulver gesiebt oder durch Windsichten behandelt wird, so dass es weniger als 1 Gewichtsprozent an Teilchen mit einem Durchmesser kleiner als 5 $\mu$m aufweist;
   Erzeugen eines geformten Halbzeugs aus dem Pulver mit einem 3D-Druckverfahren, indem das Pulver schichtweise aufgetragen wird und die Pulverpartikel der jeweils neu aufgetragenen Schicht an der Oberfläche des zu formenden Halbzeugs durch gezielten lokalen Wärmeeintrag mit einem Elektronenstrahl oder einem Laserstrahl vollständig aufgeschmolzen und beim wieder Abkühlen miteinander verbunden werden unter Bildung einer dichten, porenfreien Struktur, während das Pulver im Volumen des zu formenden Halbzeugs lediglich angesintert wird, um eine Haftung der Pulverpartikel an den nächsten Nachbarn zu erzielen; und
   Heißpressen des Halbzeugs, wobei das Heißpressen bei einer Temperatur T erfolgt, die zwischen der Transformationstemperatur $T_T$ und der Kristallisationstemperatur $T_K$ der amorphen Phase der Metalllegierung liegt und folgender Bedingung genügt:

$$T_T < T < T_T + (30/100) * (T_K - T_T),$$

   wobei während des Heißpressens ein mechanischer Druck auf das Halbzeug ausgeübt wird und das Halbzeug während des Heißpressens verdichtet wird und die Dauer des Heißpressens in einem zeitlichen Bereich von 3 Sekunden pro Millimeter der Dicke oder des größten relevanten Durchmessers des Halbzeugs bis 900 Sekunden pro Millimeter der Dicke oder des größten relevanten Durchmessers des Halbzeugs erfolgt, so dass die Pulverpartikel nach dem Heißpressen verbunden sind und das hergestellte Bauteil einen amorphen Anteil von mindestens 85 Prozent aufweist.

2. Verfahren nach Anspruch 1, **dadurch gekennzeichnet, dass** das Heißpressen des Halbzeugs durch ein Heiß-Isostatisches Pressen des Halbzeugs realisiert wird.

3. Verfahren nach Anspruch 1 oder 2, **dadurch gekennzeichnet, dass** das Heißpressen unter Vakuum erfolgt.

4. Verfahren nach Anspruch 3, **dadurch gekennzeichnet, dass** das Halbzeug durch ein Heißpressen bei einem Vakuum von zumindest $10^{-3}$ mbar verdichtet wird.

**5.** Verfahren nach einem der vorhergehenden Ansprüche, **dadurch gekennzeichnet, dass** das Pulver aus sphärischen Pulverpartikeln besteht und die Pulverpartikel einen Durchmesser von weniger als 125 $\mu$m aufweisen.

**6.** Verfahren nach einem der vorhergehenden Ansprüche, **dadurch gekennzeichnet, dass** das hergestellte Bauteil einen amorphen Anteil von mehr als 90 Prozent aufweist.

**7.** Verfahren nach einem der vorhergehenden Ansprüche, **dadurch gekennzeichnet, dass** als Pulver ein Pulver aus einer amorphen Metalllegierung mit mindestens 50 Gewichtsprozenten Zirkonium verwendet wird.

**8.** Verfahren nach einem der vorhergehenden Ansprüche, **dadurch gekennzeichnet, dass** als Pulver ein Pulver aus einer amorphen Metalllegierung umfassend

    a) 58 bis 77 Gewichtsprozenten Zirkonium,
    b) 0 bis 3 Gewichtsprozenten Hafnium,
    c) 20 bis 30 Gewichtsprozenten Kupfer,
    d) 2 bis 6 Gewichtsprozenten Aluminium, und
    e) 1 bis 3 Gewichtsprozenten Niob

wobei die Summe der chemischen Elemente 100% ergibt, bereitgestellt wird.

**9.** Verfahren nach einem der vorhergehenden Ansprüche, **dadurch gekennzeichnet, dass** das Pulver durch Schmelzverdüsung hergestellt wird.

**10.** Verfahren nach Anspruch 9, **dadurch gekennzeichnet, dass** das Pulver durch Schmelzverdüsung in einem Edelgas hergestellt wird.

**11.** Verfahren nach einem der vorhergehenden Ansprüche, **dadurch gekennzeichnet, dass** das Heißpressen des Pulvers bei einer Temperatur T zwischen der Transformationstemperatur $T_T$ und einer Maximal-Temperatur erfolgt, wobei die Maximal-Temperatur um 20% von der Temperaturdifferenz zwischen der Transformationstemperatur $T_T$ und der Kristallisationstemperatur $T_K$ der amorphen Phase der metallischen Legierung oberhalb der Transformationstemperatur $T_T$ liegt.

**12.** Verfahren nach einem der vorhergehenden Ansprüche **dadurch gekennzeichnet, dass** die Pulverpartikel durch das Heißpressen plastisch verformt werden.

**Claims**

**1.** Method for producing a component from an at least partially amorphous metal alloy, comprising the steps of:

preparing a powder of an at least partially amorphous metal alloy, wherein the powder comprises less than 1 percent by weight of particles with a diameter smaller than 5 $\mu$m or the powder is screened or treated by air classification, so that it comprises less than 1 weight percent of particles with a diameter smaller than 5 $\mu$m;
creating a formed semifinished product from the powder by a 3D printing process, in that the powder is applied layer by layer and the powder particles of the layer newly applied in each case are made to melt completely at the surface of the semifinished product to be formed by selective local heat input with an electron beam or a laser beam and, when they cool down again, are bonded to one another to form a dense, pore-free structure, while the powder in the volume of the semifinished product to be formed is merely made to begin sintering in order to achieve a bonding of the powder particles to the nearest neighbour; and
hot pressing of the semifinished product, wherein the hot pressing is performed at a temperature T that lies between the transformation temperature $T_T$ and the crystallization temperature $T_K$ of the amorphous phase of the metal alloy and satisfies the following condition:

$$T_T < T < T_T + (30/100) \cdot (T_K - T_T),$$

wherein a mechanical pressure is exerted on the semifinished product during the hot pressing and the semifinished product is compacted during the hot pressing and the duration of the hot pressing is in a time range of 3 seconds per millimetre of the thickness or of the greatest relevant diameter of the semifinished product to 900 seconds per millimetre of the thickness or of the greatest relevant diameter of the semifinished product, so that after the hot pressing the powder particles are bonded and the component produced has an amorphous fraction of at least 85 percent.

2. Method according to Claim 1, **characterized in that** the hot pressing of the semifinished product is realized by hot-isostatic pressing of the semifinished product.

3. Method according to Claim 1 or 2, **characterized in that** the hot pressing takes place under a vacuum.

4. Method according to Claim 3, **characterized in that** the semifinished product is compacted by hot pressing under a vacuum of at least $10^{-3}$ mbar.

5. Method according to one of the preceding claims, **characterized in that** the powder consists of spherical powder particles and the powder particles have a diameter of less than 125 $\mu$m.

6. Method according to one of the preceding claims, **characterized in that** the component produced has an amorphous fraction of more than 90 percent.

7. Method according to one of the preceding claims, **characterized in that** a powder of an amorphous metal alloy with at least 50 percent by weight of zirconium is used as the powder.

8. Method according to one of the preceding claims, **characterized in that** a powder of an amorphous metal alloy comprising

a) 58 to 77 weight percent zirconium;
b) 0 to 3 weight percent hafnium;
c) 20 to 30 weight percent copper;
d) 2 to 6 weight percent aluminium; and
e) 1 to 3 weight percent niobium,

wherein the sum of the chemical elements gives 100%,
is provided as the powder.

9. Method according to one of the preceding claims, **characterized in that** the powder is produced by melt spinning.

10. Method according to Claim 9, **characterized in that** the powder is produced by melt spinning in a noble gas.

11. Method according to one of the preceding claims, **characterized in that** the hot pressing of the powder takes place at a temperature T between the transformation temperature $T_T$ and a maximum temperature, wherein the maximum temperature lies above the transformation temperature $T_T$ by 20% of the temperature difference between the transformation temperature $T_T$ and the crystallization temperature $T_K$ of the amorphous phase of the metal alloy.

12. Method according to one of the preceding claims, **characterized in that** the powder particles are plastically deformed by the hot pressing.

## Revendications

1. Procédé de fabrication d'un composant à partir d'un alliage métallique au moins partiellement amorphe, comprenant les étapes suivantes :

la préparation d'une poudre à partir d'un alliage métallique au moins partiellement amorphe, la poudre comprenant moins de 1 pour cent en poids de particules ayant un diamètre inférieur à 5 $\mu$m ou la poudre étant tamisée ou traitée par criblage à l'air de telle sorte qu'elle comprenne moins de 1 pour cent en poids de particules ayant un diamètre inférieur à 5 $\mu$m ;

la formation d'un semi-fini façonné à partir de la poudre avec un procédé d'impression 3D par application de la poudre en couches et fusion totale des particules de poudre de chaque couche nouvellement appliquée sur la surface du semi-fini à façonner par apport de chaleur local ciblé avec un faisceau d'électron ou un faisceau laser, et liaison de celles-ci entre-elles lors du refroidissement ultérieur avec formation d'une structure étanche exempte de pores, tandis que la poudre n'est frittée que partiellement dans le volume du semi-fini à façonner afin d'obtenir une adhésion des particules de poudre aux voisins les plus proches ; et

la compression à chaud du semi-fini, la compression à chaud ayant lieu à une température T qui est comprise entre la température de transformation $T_T$ et la température de cristallisation $T_K$ de la phase amorphe de l'alliage métallique, et satisfait la condition suivante :

$$T_T < T < T_T + (30/100)*(T_K - T_T),$$

une pression mécanique étant exercée sur le semi-fini pendant la compression à chaud, et le semi-fini étant compacté pendant la compression à chaud, et la durée de la compression à chaud se situant dans une plage temporelle allant de 3 secondes par millimètre de l'épaisseur ou du diamètre pertinent le plus grand du semi-fini à 900 secondes par millimètre de l'épaisseur ou du diamètre pertinent le plus grand du semi-fini, de telle sorte que les particules de poudre soient reliées après la compression à chaud et que le composant fabriqué présente une proportion amorphe d'au moins 85 pour cent.

2. Procédé selon la revendication 1, **caractérisé en ce que** la compression à chaud du semi-fini est réalisée par une compression isostatique à chaud du semi-fini.

3. Procédé selon la revendication 1 ou 2, **caractérisé en ce que** la compression à chaud a lieu sous vide.

4. Procédé selon la revendication 3, **caractérisé en ce que** le semi-fini est compacté par une compression à chaud sous un vide d'au moins $10^{-3}$ mbar.

5. Procédé selon l'une quelconque des revendications précédentes, **caractérisé en ce que** la poudre est constituée par des particules de poudre sphériques, et les particules de poudre présentent un diamètre de moins de 125 $\mu$m.

6. Procédé selon l'une quelconque des revendications précédentes, **caractérisé en ce que** le composant fabriqué présente une proportion amorphe de plus de 90 pour cent.

7. Procédé selon l'une quelconque des revendications précédentes, **caractérisé en ce qu'**une poudre d'un alliage métallique amorphe contenant au moins 50 pour cent en poids de zirconium est utilisée en tant que poudre.

8. Procédé selon l'une quelconque des revendications précédentes, **caractérisé en ce qu'**une poudre d'un alliage métallique amorphe comprenant :

   a) 58 à 77 pour cent en poids de zirconium,
   b) 0 à 3 pour cent en poids d'hafnium,
   c) 20 à 30 pour cent en poids de cuivre,
   d) 2 à 6 pour cent en poids d'aluminium et
   e) 1 à 3 pour cent en poids de niobium,

   la somme des éléments chimiques étant de 100 %,
   est préparée en tant que poudre.

9. Procédé selon l'une quelconque des revendications précédentes, **caractérisé en ce que** la poudre est fabriquée par pulvérisation à l'état fondu.

10. Procédé selon la revendication 9, **caractérisé en ce que** la poudre est fabriquée par pulvérisation à l'état fondu dans un gaz noble.

11. Procédé selon l'une quelconque des revendications précédentes, **caractérisé en ce que** la compression à chaud de la poudre a lieu à une température T comprise entre la température de transformation $T_T$ et une température maximale, la température maximale étant située 20 % de la différence de température entre la température de transformation $T_T$ et la température de cristallisation $T_K$ de la phase amorphe de l'alliage métallique au-dessus de la température de transformation $T_T$.

**12.** Procédé selon l'une quelconque des revendications précédentes, **caractérisé en ce que** les particules de poudre sont déformées plastiquement par la compression à chaud.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3524018 A1
- EP 2430205 B1
- WO 2008039134 A1
- US 2013309121 A1
- DE 102010027802 A1
- WO 2014071135 A1
- EP 2737964 A1
- JP 2009138266 A
- WO 9930858 A1